# EUROPEAN PATENT APPLICATION

(11) **EP 3 604 886 A1**
(43) Date of publication of application: **05.02.2020**
(21) Application number: 18777804.8
(22) Date of filing: 23.02.2018
(51) Int. Cl.: F16L 59/065, F16L 59/07

(54) **THERMAL CONDUCTIVITY SWITCHING UNIT**

(30) Priority: 31.03.2017 JP 2017072699
(71) Applicant: Panasonic Intellectual Property Management Co., Ltd., Osaka-shi, Osaka 540-6207 (JP)
(72) Inventor: ABE, Hiroyuki, Osaka-shi, Osaka 540-6207 (JP)
(74) Representative: Müller-Boré & Partner Patentanwälte PartG mbB
(86) International application number: PCT/JP2018/006725
(87) International publication number: WO 2018/180075

(57) **Abstract**

A thermal conductivity changing unit having an efficiently manufacturable structure is provided. A thermal conductivity changing unit includes: at least one thermal conductivity changing device (8); and a gas barrier film (9) having an accommodation space (S1) which accommodates the at least one thermal conductivity changing device (8). Each of the at least one thermal conductivity changing device (8) includes a pair of panels (1 and 2), a spacer (3), and a switching mechanism (4). The spacer (3) forms a space (S11) between the pair of panels (1 and 2). The switching mechanism (4) is disposed in the space (S11) to switch heat transferability between the pair of panels (1 and 2). The gas barrier film (9) is configured to hermetically close an entirety of the accommodation space (S1) including the space (S11) in a depressurized state.

## Description

### Technical Field

The present disclosure relates to a thermal conductivity changing unit configured such that thermal conductivity is switchable.

### Background Art

Patent Literature 1 describes a thermal conductivity changing unit (panel unit) configured such that thermal conductivity is switchable.

The thermal conductivity changing unit includes: a pair of panels facing each other; a switching mechanism disposed between the pair of panels; and an annular partition binding peripheral portions of the pair of panels together. The annular partition separates a space between the pair of panels from surroundings such that the space is maintained in a depressurized state.

### Citation List

### Patent Literature

Patent Literature 1: WO 2016/051786

### Summary of Invention

It is an object of the present disclosure to provide a thermal conductivity changing unit having an efficiently manufacturable structure.

A thermal conductivity changing unit according to one aspect of the present disclosure includes: at least one thermal conductivity changing device; and a gas barrier film having an accommodation space in which the at least one thermal conductivity changing device is accommodated. Each of the at least one thermal conductivity changing device includes: a pair of panels located to face each other; a spacer lying between the pair of panels to form a space between the pair of panels; and a switching mechanism disposed in the space to switch heat transferability between the pair of panels. The gas barrier film is sealed such that an entirety of the accommodation space including the space is maintained in a depressurized state.

A method according to one aspect of the present disclosure is a method for manufacturing a thermal conductivity changing unit, the method including: a disposition step of disposing at least one thermal conductivity changing device in an accommodation space on an inner side of a gas barrier film; and a sealing step of sealing the gas barrier film such that the accommodation space is maintained in a depressurized state. Each of the at least one thermal conductivity changing device includes: a pair of panels located to face each other; a spacer lying between the pair of panels to form a space which is open between the pair of panels; anda switching mechanism disposed in the space to switch heat transferability between the pair of panels.

### Brief Description of Drawings

FIG. 1A is a partially cutaway side view illustrating a thermal conductivity changing unit of one embodiment, wherein a switching mechanism is in a heat insulation state, and FIG. 1B is a partially cutaway side view illustrating the thermal conductivity changing unit, wherein a switching mechanism is in a heat dissipation state;
FIG. 2A is a side view illustrating a first step for manufacturing a thermal conductivity changing device to be provided in the thermal conductivity changing unit, FIG. 2B is a side view illustrating a second step for manufacturing the thermal conductivity changing device, and FIG. 2C is a side view illustrating a third step for manufacturing the thermal conductivity changing device;
FIG. 3A is a side view illustrating a first step for manufacturing the thermal conductivity changing unit, and FIG. 3B is a side view illustrating a second step for manufacturing the thermal conductivity changing unit;
FIG. 4 is a partially cutaway side view illustrating a thermal conductivity changing unit of a first variation;
FIG. 5 is a partially cutaway side view illustrating a thermal conductivity changing unit of a second variation;
FIG. 6A is a partially cutaway side view illustrating a thermal conductivity changing unit of a third variation, and FIG. 6B is a partially cutaway side view illustrating the thermal conductivity changing unit in a bent state;
FIG. 7A is a partially cutaway side view illustrating a thermal conductivity changing unit of a fourth variation, wherein a switching mechanism is in a heat insulation state, and FIG. 7B is a partially cutaway side view illustrating the thermal conductivity changing unit of the fourth variation, wherein a switching mechanism is in a heat dissipation state;
FIG. 8A is a partially cutaway side view illustrating a thermal conductivity changing unit of a fifth variation, wherein a switching mechanism is in a heat insulation state, and FIG. 8B is a partially cutaway side view illustrating the thermal conductivity changing unit of the fifth variation, wherein the switching mechanism is in a heat dissipation state;
FIG. 9A is a partially cutaway side view illustrating a thermal conductivity changing unit of a sixth variation, wherein a switching mechanism is in a heat insulation state, and FIG. 9B is a partially cutaway side view illustrating the thermal conductivity changing unit of the sixth variation, wherein the switching mechanism is in a heat dissipation state;
FIG. 10 is a side view illustrating a thermal conductivity changing device included in a thermal conductivity changing unit of a seventh variation;
FIG. 11A is a plan view illustrating a main part of the thermal conductivity changing device of the seventh variation, wherein a switching mechanism is in a heat insulation state, and FIG. 11B is a plan view illustrating the main part of the thermal conductivity changing device of the seventh variation, wherein the switching mechanism is in a heat dissipation state;
FIG. 12A is a side view illustrating a thermal conductivity changing device included in a thermal conductivity changing unit of an eighth variation, wherein a switching mechanism is in a heat insulation state, and FIG. 12B is a side view illustrating the thermal conductivity changing device included in the thermal conductivity changing unit of the eighth variation, wherein the switching mechanism is in a heat dissipation state;
FIG. 13 is a side view illustrating a thermal conductivity changing device included in a thermal conductivity changing unit of a ninth variation; and
FIG. 14 is a side view illustrating a thermal conductivity changing device included in a thermal conductivity changing unit of a tenth variation.

### Description of Embodiments

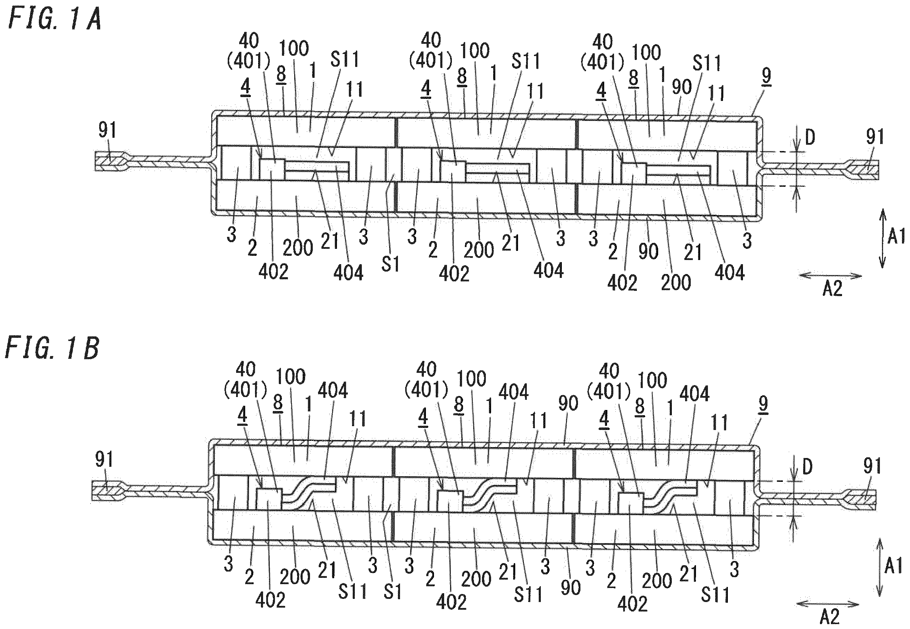

FIGS. 1A and 1B show a thermal conductivity changing unit of one embodiment in a schematic view, wherein part (i.e., a gas barrier film 9) of the thermal conductivity changing unit is cutaway.

The thermal conductivity changing unit of the present embodiment includes: a plurality of (three) thermal conductivity changing devices 8; and a gas barrier film 9 having an accommodation space S1 in which the plurality of thermal conductivity changing devices 8 are hermetically accommodated.

First of all, the thermal conductivity changing devices 8 will be described.

Each thermal conductivity changing device 8 includes: a pair of panels 1 and 2 which are parallel to each other; and a plurality of spacers 3 located apart from each other between the pair of panels 1 and 2. As used herein, the term "parallel" is not limited to a meaning of "completely parallel" but includes a meaning of "substantially parallel". Between the pair of panels 1 and 2, at least one spacer 3 is disposed.

Each spacer 3 abuts counter surfaces 11 and 21 respectively of the pair of panels 1 and 2 to maintain a distance between the pair of panels 1 and 2. Each spacer 3 is made of a highly thermally insulative material such as a resin, glass, a ceramic material, or a porous material and has, for example, a columnar shape.

In the following description, one of the pair of panels 1 and 2 is referred to as a first panel 1, and the other of the pair of panels 1 and 2 is referred to as a second panel 2. Between the first panel 1 and the second panel 2, a space S11 is formed.

In the thermal conductivity changing device 8, peripheral portions of the first panel 1 and the second panel 2 are not hermetically bound together, and thus, the space S11 is not hermetically sealed. The space S11 is formed to communicate with a space outside the thermal conductivity changing device 8.

In the space S11, a switching mechanism 4 is disposed. The switching mechanism 4 has a geometric dimension which changes (in other words, deforms) due to externally given thermal energy. The switching mechanism 4 deforms, thereby switching the thermal conductivity of the thermal conductivity changing device 8 (and thus thermal conductivity of the entirety of the thermal conductivity changing unit).

Saying that the thermal conductivity of the thermal conductivity changing device 8 is high means that heat is easily transmitted between the first panel 1 and the second panel 2. Saying that the thermal conductivity of the thermal conductivity changing device 8 is low means that heat is not easily transmitted between the first panel 1 and the second panel 2. Saying that the thermal conductivity of the thermal conductivity changing device 8 is switched means that the degree to which transmission of heat between the first panel 1 and the second panel 2 is easy is changed.

The first panel 1 includes a thermally conductive panel 100 as a main body. The thermally conductive panel 100 may be made of, for example, thermal conductivity metal such as aluminum, copper, or stainless steel or may be made of other materials such as a thermally conductive resin. The thermally conductive panel 100 may be accordingly provided with a coating.

Similarly, the second panel 2 includes a thermally conductive panel 200 as a main body. The thermally conductive panel 200 may be made of, for example, thermal conductivity metal, such as aluminum, copper, or stainless steel or may be made of other materials such as a thermally conductive resin. The thermally conductive panel 200 may be accordingly provided with a coating.

The switching mechanism 4 includes a thermal conduction part 40 located in the space S11. In the thermal conductivity changing device 8 of the present embodiment, one thermally conductive member 401 is included in thermal conduction part 40, but a plurality of thermally conductive members 401 may be included in the thermal conduction part 40.

The thermally conductive member 401 has a plate shape and is made of bimetal having a structure including two thin plates which adhere to each other and which have different coefficients of thermal expansion.

The thermally conductive member 401 is at least configured to deform in accordance with a change of the temperature of the thermally conductive member 401. The thermally conductive member 401 may be made of other materials such as a shape-memory alloy.

The thermally conductive member 401 has a first end serving as a fixing part 402 mechanically and thermally connected to the counter surface 21 of the second panel 2. The thermally conductive member 401 has a second end located on an opposite side of the fixing part 402. The second end serves as a movable end part 404 configured to come into contact with the first panel 1.

In the thermal conductivity changing device 8 of the present embodiment, the change of the temperature of the thermally conductive member 401 deforms the thermally conductive member 401 in a direction A1 in which the first panel 1 and the second panel 2 face each other. Thus, the movable end part 404 is displaced along the direction A1.

FIG. 1A shows a heat insulation state of the switching mechanism 4 of each thermal conductivity changing device 8. In the heat insulation state, the movable end part 404 is located apart from the first panel 1, and the movable end part 404 is thermally insulated from the first panel 1. As used herein, the term "insulate" is not limited to a meaning of "completely insulate" but may include a meaning of "substantially insulate" with a high thermal resistance.

FIG. 1B shows a heat dissipation state of the switching mechanism 4 of each thermal conductivity changing device 8. In the heat dissipation state, the movable end part 404 is in contact with the first panel 1, and the movable end part 404 is thermally connected to the first panel 1.

Next, the gas barrier film 9 will be described.

The gas barrier film 9 includes: a pair of films 90 which have a gas barrier property and which are flexible; and a sealing member 91 which hermetically binds peripheral portions of the pair of films 90 together. Each film 90 may be made of, for example, gas-barrier metal such as aluminum or may be made of other materials such as a gas-barrier resin. The gas barrier film 9 may include three of more films 90.

The pair of films 90 are hermetically bound together with the sealing member 91 interposed therebetween, and the sealing member 91 is made of, for example, a resin, but the component for binding the pair of films 90 together is not particularly limited to this example. For example, the sealing member 91 may be made of metal or glass, or the pair of films 90 may be bound together by, for example, fusion welding or pressure welding without an interposed component such as the sealing member 91.

Between the pair of films 90, the accommodation space S1, which is hermetically sealed, is formed. In the accommodation space S1, the plurality of thermal conductivity changing devices 8 are aligned and accommodated.

A direction in which the plurality of thermal conductivity changing devices 8 are aligned is a direction A2 orthogonal to a thickness direction of the thermal conductivity changing unit of the present embodiment. The thickness direction mentioned herein is, in other words, the direction A1 in which the first panel 1 and the second panel 2 of the thermal conductivity changing device 8 face each other. The plurality of thermal conductivity changing devices 8 may be aligned linearly or planarly.

When the plurality of thermal conductivity changing devices 8 are aligned planarly, the alignment thereof is not particularly limited. For example, a plurality of thermal conductivity changing devices 8 each having a quadrangular outer shape may be aligned in a matrix form, or a plurality of thermal conductivity changing devices 8 each having another outer shape such as a triangular shape, a hexagonal shape, or the like may be aligned in a matrix form.

The accommodation space S1 is hermetically closed in a depressurized state. That is, the entirety of the accommodation space S1 including the space S11 of each thermal conductivity changing device 8 is hermetically closed in the depressurized state.

In the accommodation space S1, a getter is preferably further accommodated. The getter is a member configured to adsorb gas molecules. When the getter is disposed in the accommodation space S1, the accommodation space S1 is easily maintained in the depressurized state.

The entirety of the accommodation space S1 including the space S11 of each thermal conductivity changing device 8 is preferably a vacuum space depressurized to a vacuum. As used herein, "vacuum space" means a space having a pressure reduced to or below 0.1 [Pa].

Moreover, in each thermal conductivity changing device 8, when a mean free path λ[m] of gas in the space S11 and a distance D[m] between the first panel 1 and the second panel 2 are in a relationship λ/D > 0.3, the space S11 is a molecular flow area. This provides the property that the thermal conductance of the space S11 does not depend on the distance D.

That is, when the relationship is satisfied, the thickness of the thermal conductivity changing device 8 being highly thermally insulative in the heat insulation state of the switching mechanism 4 can be reduced as much as possible.

In general, the thermal conductance of both a solid and gas decreases as the distance by which heat is conducted increases. Therefore, as the thickness of each thermal conductivity changing device 8 decreases, disadvantages for enhancing the thermal insulation property of the space S11 generally increases. However, in a case where the relationship λ/D > 0.3 is satisfied in the space S11, it is achieved both that the space S11 is highly thermally insulative and that the thickness of each thermal conductivity changing device 8 is reduced.

Having a small thickness, each thermal conductivity changing device 8 can exhibit a high thermal conductivity due to its thinness when the first panel 1 and the second panel 2 are thermally connected to each other via the switching mechanism 4. That is, in a case where the relationship λ/D > 0.3 is satisfied in the space S11, when the first panel 1 and the second panel 2 are thermally connected to each other via the switching mechanism 4, the thermal conductivity changing device 8 can exhibit a high thermal conductivity due to its thinness, and when the first panel 1 and the second panel 2 are thermally insulated, the thermal conductivity changing device 8 can exhibit a high thermal insulation property due to the thermal insulation property of the space S11.

In addition, when the relationship λ/D > 0.3 is satisfied in the space S11, and the space S11 is thus the molecular flow region, the property is obtained that thermal conductance between the movable end part 404 of the thermally conductive member 401 and the first panel 1 does not depend on the distance between the movable end part 404 and the first panel 1.

Thus, in a state where the movable end part 404 and the first panel 1 are out of contact with each other and the movable end part 404 is very close to the first panel 1, it is possible to reduce the occurrence of a situation where although the movable end part 404 is out of contact with the first panel 1, the thermal conductance between the movable end part 404 and the first panel 1 increases (and consequently, a situation where the operation accuracy of the thermal conductivity changing device 8 decreases).

As described above, in the thermal conductivity changing unit of the present embodiment, the switching mechanism 4 of each thermal conductivity changing device 8 freely switches between the heat insulation state and the heat dissipation state. In the heat insulation state, the thermal conduction part 40 (i.e., thermally conductive member 401) is in contact with only the second panel 2. In the heat dissipation state, the thermal conduction part 40 is in contact with both the first panel 1 and the second panel 2.

For example, when a material for the first panel 1 and the second panel 2 is aluminum, a material for the spacer 3 is a resin, the bimetal for the thermally conductive member 401 is bimetal including a thin plate made of aluminum and a thin plate made of an Fe-Ni alloy which are bound together, heat transferability between the first panel 1 and the second panel 2 significantly changes between the heat insulation state and the heat dissipation state. For example, the thermal conductivity between the first panel 1 and the second panel 2 is as very low as 0.006[W/mK] in the heat insulation state, whereas the thermal conductivity is as very high as 196[W/mK] in the heat dissipation state.

Thus, when the material for the first panel 1 and the second panel 2 is a conductive material, and the material for the spacer 3 is an insulation material, the heat transferability between the first panel 1 and the second panel 2 is significantly different between the heat insulation state and the heat dissipation state.

Accordingly selecting the material and the like for the bimetal for forming the thermally conductive member 401 enables the thermally conductive member 401 to be configured to go into the heat insulation state at low temperature and the heat dissipation state at high temperature, or into the heat dissipation state at low temperature and the heat insulation state at high temperature.

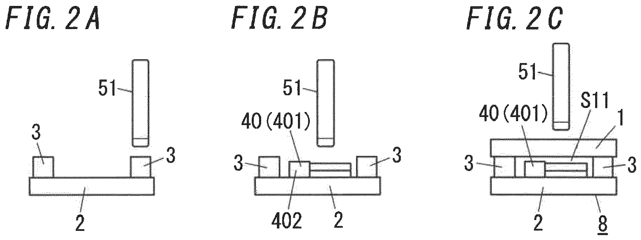

FIGS. 2A to 2C schematically show steps for manufacturing the thermal conductivity changing device 8.

In the step shown in FIG. 2A, a suction pin 51 is used to dispose the plurality of spacers 3 in a prescribed arrangement on one surface in a thickness direction of the second panel 2, and the plurality of spacers 3 are bound to the one surface. In the step shown in FIG. 2B, the suction pin 51 is used to dispose the thermally conductive member 401 on the one surface in the thickness direction of the second panel 2, and the fixing part 402 of the thermally conductive member 401 is bound to the second panel 2. In the step shown in FIG. 2C, the suction pin 51 is used to place the first panel 1 on the plurality of spacers 3, and the plurality of spacers 3 and the first panel 1 are bound together.

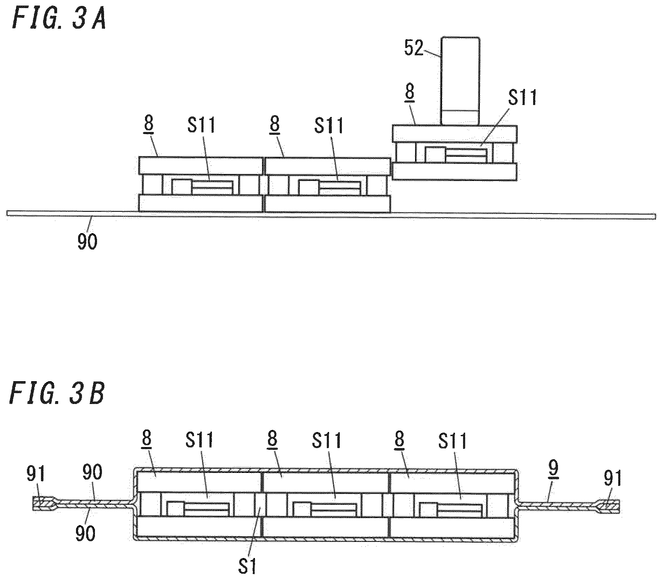

FIGS. 3A and 3B schematically shows steps of manufacturing the thermal conductivity changing unit of the present embodiment including thermal conductivity changing devices 8 formed in the steps described above.

In the step shown in FIG. 3A, a suction pin 52 is used to dispose the plurality of thermal conductivity changing devices 8 in a prescribed arrangement on one film 90. In the step shown in FIG. 3B, another film 90 covers the plurality of thermal conductivity changing devices 8 such that the plurality of thermal conductivity changing devices 8 are sandwiched between the one film 90 and the another film 90. Then, peripheral portions of the two films 90, except for some portions, are hermetically sealed, thereby forming the gas barrier film 9 before final sealing. These steps are included in a disposition step of disposing at least one thermal conductivity changing device 8 (in the present embodiment, three thermal conductivity changing devices 8) in the accommodation space S1 on an inner side of the gas barrier film 9.

Following the disposition step, the accommodation space S1 is vacuumed, and the peripheral portions of both the films 90 are hermetically sealed. This step is a sealing step of sealing the gas barrier film 9 such that the accommodation space S1 is maintained in the depressurized state. In the gas barrier film 9 after the sealing step, the depressurized state is maintained in the space S1 of each of the plurality of thermal conductivity changing devices 8.

Thus, in the thermal conductivity changing unit of the present embodiment, the spaces S11 of the plurality of thermal conductivity changing devices 8 are collectively depressurized and sealed by using the gas barrier film 9. Sealing of the gas barrier film 9 is realizable by, for example, locally heating an outer periphery of the gas barrier film 9 and is thus relatively easy. Thus, the thermal conductivity changing unit of the present embodiment provides the advantage that enhancement of production efficiency is realized.

The thermal conductivity changing unit of the present embodiment further provides the following advantages.

For example, in the thermal conductivity changing unit of the present embodiment, the sealing member 91 is located at the outer periphery of the gas barrier film 9. Thus, when a plurality of thermal conductivity changing units are aligned, the outer periphery of the gas barrier film 9 can be bent such that the sealing members 91 of adjacent ones of the thermal conductivity changing units do not come into contact with each other. This reduces thermal conduction between the adjacent ones of the thermal conductivity changing units.

The thermal conductivity changing unit of the present embodiment enables the plurality of thermal conductivity changing device 8 to be installed adjacent to each other in the gas barrier film 9, which reduces an increase in size of each thermal conductivity changing device 8. This reduces an increase in size of a device configured to manufacture the thermal conductivity changing devices 8.

Additionally, when the increase in size of the thermal conductivity changing device 8 (i.e., an increase of sizes of the first panel 1 and the second panel 2) is reduced, it is possible to reduce, in a manufacturing process of the thermal conductivity changing device 8, the occurrence of large positional displacement (in particular, positional displacement around a rotary shaft extending in the direction A1) between the first panel 1 and the second panel 2.

In the thermal conductivity changing unit of the present embodiment, the plurality of thermal conductivity changing devices 8 are accommodated in the gas barrier film 9. Therefore, even when one of the plurality of thermal conductivity changing devices 8 is a defective product, it is possible to discard only the defective product, and loss is thus reduced.

In the thermal conductivity changing unit of the present embodiment, various specifications are realizable by combining the plurality of thermal conductivity changing devices 8 accommodated in the gas barrier film 9.

Next, technical fields to which the thermal conductivity changing unit of the present embodiment is applicable will be described.

The thermal conductivity changing unit of the present embodiment is applicable to various technical fields such as fields of thermal control in buildings, thermal control of engines, thermal control of electronic apparatuses, and exhaust heat utilization in factories.

In the field of thermal control in buildings, the thermal conductivity changing unit is used as, for example, a wall material. In this case, the thermal conductivity changing unit is configured such that when a room temperature is higher than a predetermined temperature, for example, in the summer season, the switching mechanism 4 is in the heat dissipation state, whereas when the room temperature is lower than or equal to the predetermined temperature, the switching mechanism 4 is in the heat insulation state.

In the field of thermal control of engines, the thermal conductivity changing unit is wound around, for example, an engine. In this case, the thermal conductivity changing unit is configured such that when an engine temperature is higher than a predetermined temperature, the switching mechanism 4 is in the heat dissipation state, whereas when the engine temperature is lower than or equal to the predetermined temperature, the switching mechanism 4 is in the heat insulation state.

In the field of thermal control of electron apparatuses, the thermal conductivity changing unit is incorporated into, for example, an electronic apparatus. In this case, the thermal conductivity changing unit is configured such that when the temperature of the electronic apparatus is higher than a predetermined temperature, the switching mechanism 4 is in the heat dissipation state, whereas when the temperature of the electronic apparatus is lower than or equal to the predetermined temperature, the switching mechanism 4 is in the heat insulation state.

In the field of exhaust heat utilization in factories, the thermal conductivity changing unit is disposed, for example, between a heat source of a factory and a power generator. In this case, the thermal conductivity changing unit is configured such that when the temperature of the heat source is higher than a predetermined temperature, the switching mechanism 4 is in the heat dissipation state, whereas when the temperature of the heat source is lower than or equal to the predetermined temperature, the switching mechanism 4 is in the heat insulation state. Thus, only when the temperature of the heat source is higher than the predetermined temperature (that is, only under condition that exhaust heat is efficiently usable), heat of the heat source is used for power generation.

The above-described technical fields are mere examples, and the thermal conductivity changing unit of the present embodiment is applicable in various technical fields such as fields of dwelling houses, factories, commercial facilities, aircrafts, automobiles, and apparel.

Next, various types of variations of the thermal conductivity changing unit of the present embodiment will be described. In the following description of the variations, components similar to those described above will be designated by the same reference signs as those in the above description, and the detailed description thereof will be omitted herein.

### First Variation

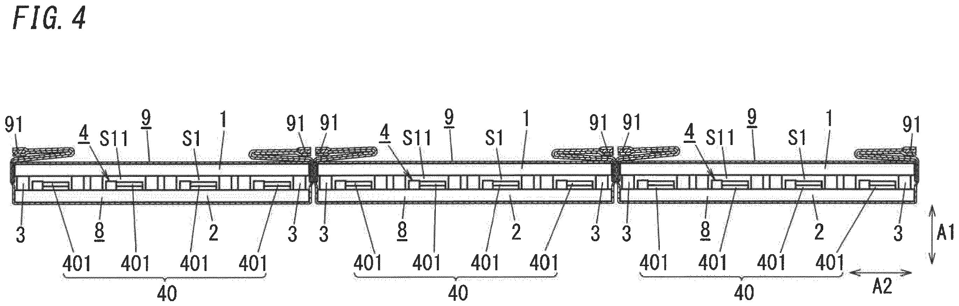

FIG. 4 shows a thermal conductivity changing unit of a first variation.

In the first variation, one thermal conductivity changing device 8 is hermetically accommodated in an accommodation space S1 in a gas barrier film 9. The one thermal conductivity changing device 8 includes a first panel 1 and a second panel 2 between which a plurality of (four) thermally conductive members 401 are provided. In the first variation, the plurality of thermally conductive members 401 are included in a thermal conduction part 40.

In the first variation, the gas barrier film 9 has a peripheral portion which includes a sealing member 91 and which is bent to one side (in FIG. 4, to an upper side) in a direction A1. Thus, although the sealing member 91 does not have a large dimension, the peripheral portion which is bent increases the reliability of sealing of the gas barrier film 9. In the first variation, the sealing member 91 does not have to have a large dimension in order to reduce conduction of heat through the sealing member 91.

### Second Variation

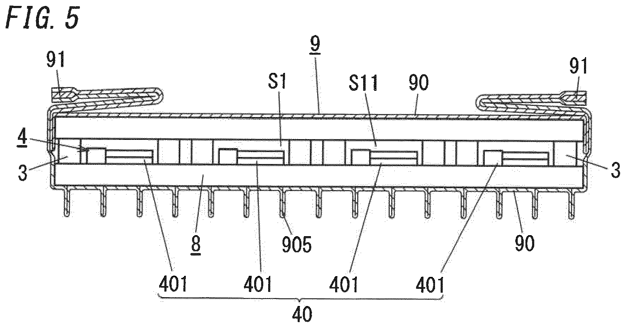

FIG. 5 shows a thermal conductivity changing unit of a second variation.

In the second variation, similarly to the first variation, one thermal conductivity changing device 8 is accommodated in an accommodation space S1 of a gas barrier film 9, and the one thermal conductivity changing device 8 is provided with a plurality of thermally conductive members 401. In the second variation, the plurality of thermally conductive members 401 are included in a thermal conduction part 40.

In the second variation, the gas barrier film 9 has a surface having an uneven pattern 905 like pleats to increase heat transferability between external air and the gas barrier film 9.

The gas barrier film 9 has the uneven pattern 905, thereby increasing the thermal conductivity of the entirety of the thermal conductivity changing unit with a switching mechanism 4 being in the heat dissipation state.

In the second variation, the gas barrier film 9 has the uneven pattern 905, which increases the difference of the thermal conductivity of the entirety of the thermal conductivity changing unit between a case where the switching mechanism 4 is in the heat dissipation state and a case where the switching mechanism 4 is in the heat insulation state.

### Third Variation

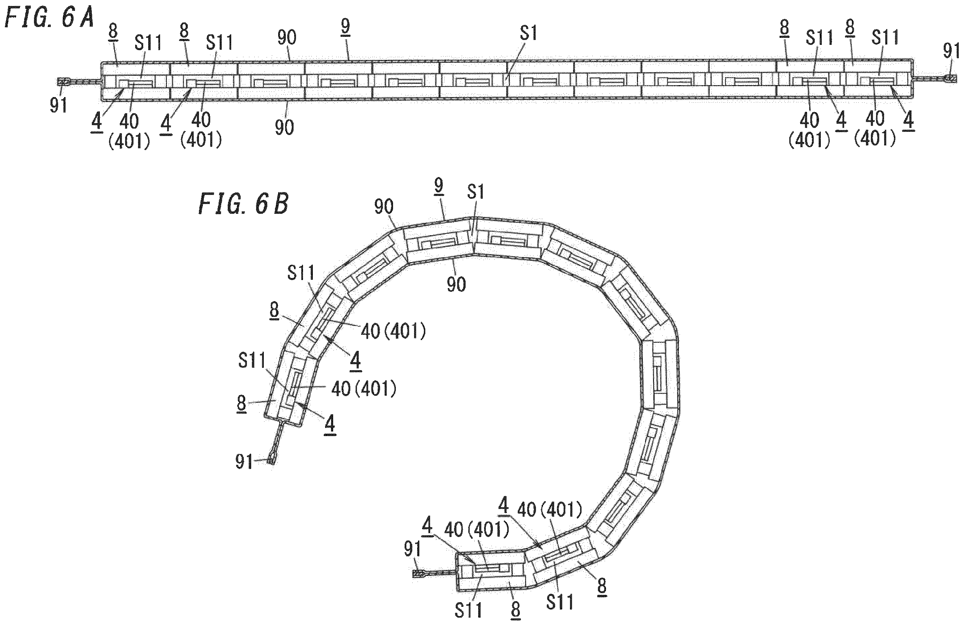

FIGS. 6A and 6B show a thermal conductivity changing unit of a third variation.

In the third variation, a large number of thermal conductivity changing devices 8 are aligned along at least one direction and are accommodated in an accommodation space S1 of a gas barrier film 9. Thus, the entirety of the thermal conductivity changing unit of the third variation is freely largely bendable as shown in FIG. 6B. Therefore, the thermal conductivity changing unit is easily installed, for example, wound around an object.

In the third variation, to further facilitate bending of the entirety of the thermal conductivity changing unit, corner portions of a first panel 1 of each thermal conductivity changing device 8 and corner portions of a second panel 2 of each thermal conductivity changing device 8 are preferably beveled.

### Fourth Variation

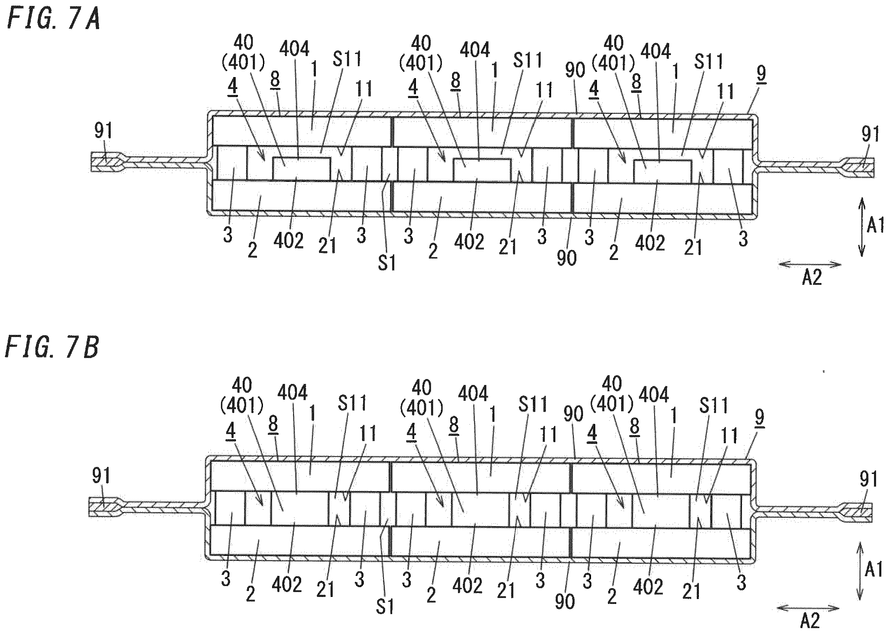

FIGS. 7A and 7B show a thermal conductivity changing unit of a fourth variation.

In the fourth variation, a switching mechanism 4 has a geometric dimension which changes (in other words, expands or contracts) in accordance with externally given thermal energy.

The switching mechanism 4 includes a thermal conduction part 40 (i.e., a thermally conductive member 401) which has a block shape and which is made of a thermally expandable material. The thermally conductive member 401 has the property (i.e., thermal expansion property) that the dimension of the thermally conductive member 401 in a direction A1 changes in accordance with a change of the temperature of the thermally conductive member 401.

The thermally conductive member 401 includes: one end serving as a fixing part 402 fixed to a counter surface 21 of a second panel 2; and a movable end part 404 located on an opposite side of the fixing part 402. The movable end part 404 is configured to abut a counter surface 11 of a first panel 1.

FIG. 7A shows a heat insulation state of the switching mechanism 4 of each thermal conductivity changing device 8. FIG. 7B shows a heat dissipation state of the switching mechanism 4 of each thermal conductivity changing device 8.

The thermally conductive member 401 is made of a thermally expandable material having a positive coefficient of thermal expansion, and thereby, it is possible to configure the switching mechanism 4 to go into the heat insulation state at low temperature and the heat dissipation state at high temperature. Alternatively, the thermally conductive member 401 is made of a thermally expandable material having a negative coefficient of thermal expansion, and thereby, it is possible to configure the switching mechanism 4 to go into the heat dissipation state at low temperature and the heat insulation state at high temperature.

### Fifth Variation

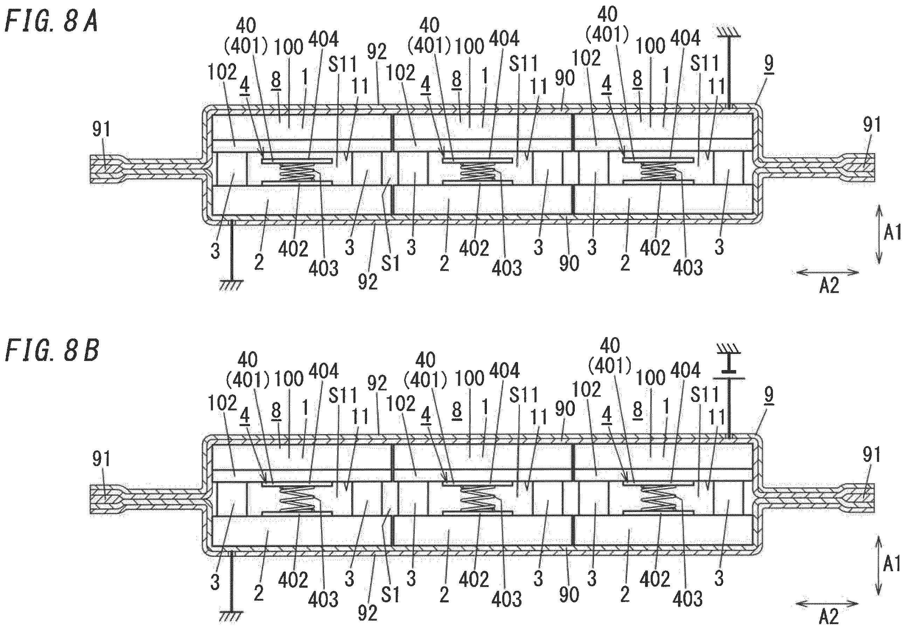

FIGS. 8A and 8B show a thermal conductivity changing unit of a fifth variation.

In the fifth variation, each of thermal conduction parts 40 (i.e., each of thermally conductive members 401) has a geometric dimension which elastically changes (i.e., elastically deforms) in accordance with externally given electrical energy.

At least part of each thermally conductive member 401 has a spring characteristic. Specifically, a coupler 403 which mechanically and thermally couples a fixing part 402 to a movable end part 404 of each thermally conductive member 401 is an elastically deformable portion. The coupler 403 is at least partially elastically deformable.

When electrical attraction force is exerted on the movable end part 404 in a space S11, the coupler 403 elastically deforms and extends, thereby moving the movable end part 404. When the electrical attraction force is no longer exerted on the movable end part 404, the coupler 403 returns to its initial shape, thereby moving the movable end part 404 to its initial location.

Thermally conductive panels 100 each serving as a main body of a corresponding one of first panels 1 are conductive. Each first panel 1 further includes a dielectric layer 102 which is stacked on a surface of a corresponding one of the thermally conductive panels 100, the surface facing a second panel 2.

A plurality of films 90 included in a gas barrier film 9 are conductive. The gas barrier film 9 further includes a dielectric layer 92. The dielectric layer 92 is stacked on an opposite surface (i.e., outer surface) of each film 90 from the accommodation space S1.

In the fifth variation, voltage application to the thermally conductive panel 100 of each first panel 1 is switched between ON and OFF, thereby rapidly switching the state of a switching mechanism 4 between the heat insulation state shown in FIG. 8A and the heat dissipation state shown in FIG. 8B.

In the heat insulation state shown in FIG. 8A, no voltage is applied to the thermally conductive panel 100. The movable end part 404 of each thermally conductive member 401 receives no electrical attraction force, and the movable end part 404 is located apart from the first panel 1.

In the heat dissipation state shown in FIG. 8B, a voltage is applied to the thermally conductive panel 100. The voltage application to the thermally conductive panel 100 is performed via the gas barrier film 9 (the film 90). Note that the gas barrier film 9 has a part from which the dielectric layer 92 is removed, and the voltage is applied to the part.

When the voltage is applied to the thermally conductive panel 100, the dielectric layer 102 stacked on the thermally conductive panel 100 is polarized, and the movable end part 404 of the thermally conductive member 401 receives the electrical attraction force. The electrical attraction force brings the movable end part 404 included in the thermally conductive member 401 into contact with counter surface 11 (i.e., a surface of the dielectric layer 102) of the first panel 1 in a thermally conductive manner.

In the fifth variation, turning on/off of the voltage application enables the switching mechanism 4 to freely switch between the heat insulation state and the heat dissipation state, and thus, the voltage application is not required in order to maintain the switching mechanism 4 in the heat insulation state.

### Sixth Variation

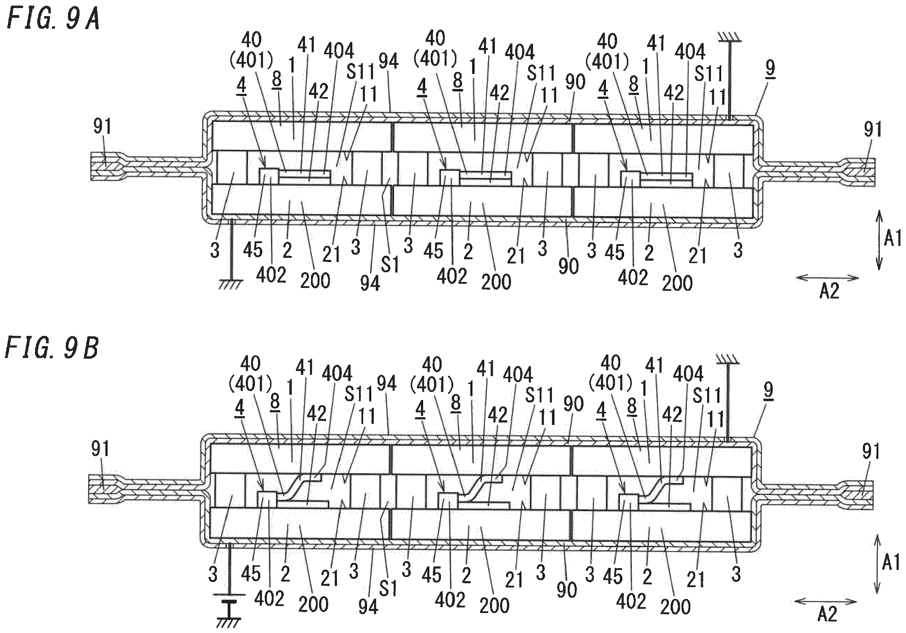

FIGS. 9A and 9B show a thermal conductivity changing unit of a sixth variation.

In the sixth variation, each of thermal conduction parts 40 (i.e., each of thermally conductive members 401) has a geometric dimension which changes (in other words, deforms) in accordance with externally given electrical energy.

Each thermally conductive member 401 includes: a pair of members 41 and 42 which are conductive and flexible; and an electrode part 45 mechanically and electrically connected to the pair of members 41 and 42. The pair of members 41 and 42 are respectively a first member 41 which is thermally conductive and a second member 42 which is thermally conductive. The first member 41 and the second member 42 are preferably, for example, metal foil made of aluminum, iron, stainless steel, copper, or the like.

The electrode part 45 is mechanically and electrically connected to the second panel 2. The second member 42 lies on a counter surface 21 of a second panel 2. The first member 41 is located on an opposite side of the second member 42 from the second panel 2.

In a space S11, when a prescribed voltage is applied via the electrode part 45 to the first member 41 and the second member 42, electrical repulsion occurs between the first member 41 and the second member 42, thereby deforming the first member 41. The first member 41 deforms, and thereby, a tip end of the first member 41 moves to a location where the tip end is in contact with a first panel 1 in a thermally conductive manner (see FIG. 9B).

When the voltage is no longer applied to the electrode part 45, the tip end of the first member 41 returns to a location apart from the first panel 1.

Thermally conductive panels 200 each serving as a main body of a corresponding one of second panels 2 are conductive. A plurality of films 90 included in a gas barrier film 9 are conductive. The gas barrier film 9 further includes a dielectric layer 94. The dielectric layer 94 is stacked on an opposite surface (i.e., outer surface) of each film 90 from the accommodation space S1.

In the sixth variation, voltage application to the thermally conductive panel 200 of the second panel 2 is switched between ON and OFF, thereby rapidly switching the state of a switching mechanism 4 between the heat insulation state shown in FIG. 9A and the heat dissipation state shown in FIG. 9B.

In the heat insulation state shown in FIG. 9A, no voltage is applied to the thermally conductive panel 200. Between the first member 41 and the second member 42, no electrical repulsion arises, and the first member 41 is apart from the first panel 1.

In the heat dissipation state shown in FIG. 9B, a voltage is applied to the thermally conductive panel 200. The voltage application to the thermally conductive panel 200 is performed via the gas barrier film 9 (film 90). The gas barrier film 9 has a part from which the dielectric layer 94 is removed, and the voltage is applied to the part.

When the thermally conductive panel 200 receives a voltage, the voltage is applied via the electrode part 45 to the first member 41 and the second member 42, and the tip end of the first member 41 is displaced due to electrical repulsion arising between the first member 41 and the second member 42 and comes into contact with the counter surface 11 of the first panel 1 in a thermally conductive manner.

In the thermally conductive member 401 of the sixth variation, the electrode part 45 is included in a fixing part 402, and the tip end of the first member 41 is included in the movable end part 404.

In the sixth variation, turning on/off of the voltage application enables the switching mechanism 4 to freely switch between the heat insulation state and the heat dissipation state, and thus, the voltage application is not required in order to maintain the switching mechanism 4 in the heat insulation state.

### Seventh Variation

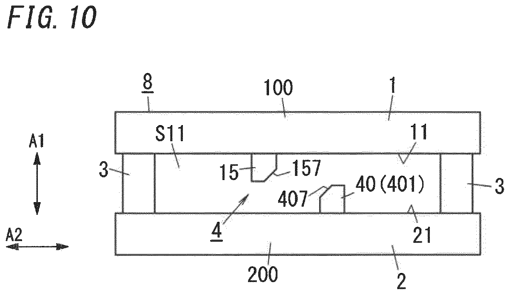

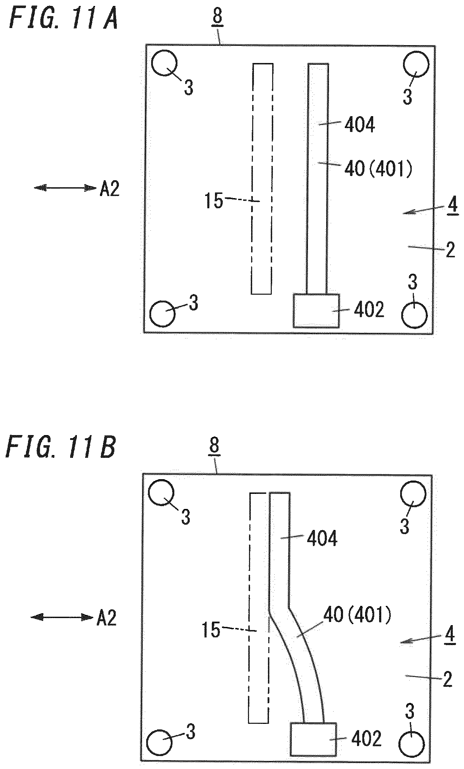

FIGS. 10, 11A, and 11B show a main part of a thermal conductivity changing unit of a seventh variation. FIG. 10 shows a thermal conductivity changing device 8 included in the thermal conductivity changing unit of the seventh variation. FIGS. 11A and 11B are plan views of the thermal conductivity changing device 8 of the seventh variation without a first panel 1.

In the seventh variation, a thermal conduction part 40 (i.e., the thermally conductive member 401) disposed between the first panel 1 and a second panel 2 is formed of at least one of bimetal or a shape-memory alloy so that the thermal conduction part 40 deforms in a direction A2 along with a change of the temperature of the thermal conduction part 40. The direction A2 is a direction orthogonal to a direction A1 in which the first panel 1 and the second panel 2 face each other.

The thermally conductive member 401 has a first end serving as a fixing part 402 mechanically and thermally connected to a counter surface 21 of the second panel 2. The thermally conductive member 401 has a second end located on an opposite side of the fixing part 402. The second end serves as a movable end part 404 movable along a second direction A2.

On the counter surface 11 of the first panel 1, a connector 15 having the shape of a projection is provided. The movable end part 404 is brought into contact with the connector 15. The connector 15 is thermally conductive. The first panel 1 and the connector 15 are thermally connected to each other.

FIGS. 10 and 11A show that a switching mechanism 4 of the thermal conductivity changing device 8 is in a heat insulation state. In the heat insulation state, the movable end part 404 is apart from the connector 15 of the first panel 1 in the direction A2 and is thermally insulated from the first panel 1. The distance between the movable end part 404 and the connector 15 is a distance that satisfactorily insulates heat.

FIG. 11B shows a heat dissipation state of the switching mechanism 4 of the thermal conductivity changing device 8. In the heat dissipation state, the movable end part 404 is in contact with the connector 15 of the first panel 1 and is thermally connected to the first panel 1.

In the seventh variation, of an outer surface of the thermally conductive member 401 (at least an outer surface of the movable end part 404), a portion which is to abut the connector 15 has a slope 407 (see FIG. 10). Of an outer surface of the connector 15, a portion which the movable end part 404 is to abut has a slope 157. When the movable end part 404 abuts the connector 15, both the slopes 407 and 157 come into contact with each other in a position parallel to each other. Thus, wide areas of the movable end part 404 and the connector 15 contact with each other.

In a tenth variation, the thermally conductive member 401 deforms in the direction A2, and therefore, it is relatively easy to set the distance between the first panel 1 and the second panel 2 to a short distance.

### Eighth Variation

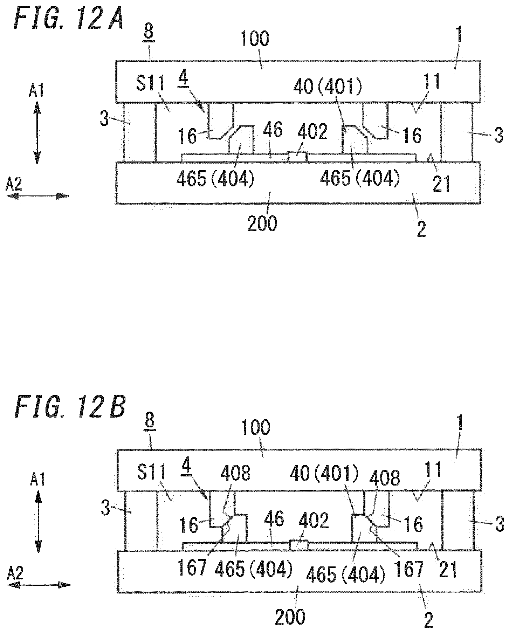

FIGS. 12A and 12B show a thermal conductivity changing device 8 included in a thermal conductivity changing unit of an eighth variation.

In the eight variation, a thermal conduction part 40 (i.e., thermally conductive member 401) is partially or entirely made of a thermally expandable material such that the dimension of the thermal conduction part 40 changes in a direction A2 in accordance with a change of the temperature of the thermal conduction part 40.

Specifically, the thermally conductive member 401 includes a thermally expandable member 46 and two connectors 465. The thermally expandable member 46 is made of a positive thermal expansion material and has a sheet-like shape. The two connectors 465 are fixed to the thermally expandable member 46 and each has the shape of a projection. The thermally conductive member 401 includes at least one connector 465.

The thermally expandable member 46 and the connectors 465 are both thermally conductive. The connectors 465 are thermally connected to the thermally expandable member 46.

The thermally expandable member 46 has one portion fixed to a counter surface 21 of a second panel 2. The one portion serves as a fixing part 402 of the thermally conductive member 401. The connectors 465 serve as movable end parts 404 of the thermally conductive member 401. The thermally expandable member 46 expands and contracts on both sides of the fixing part 402 as the center in the direction A2 in accordance with a change of the temperature of the thermally expandable member 46.

The two connectors 465 are located on both sides of the fixing part 402 in the direction A2. The connectors 465 on both the sides protrude from the thermally expandable member 46 in an orientation in which the connectors 465 approach a first panel 1. The connectors 465 on both the sides move toward or away from each other in the direction A2 in accordance with a change of the temperature of the thermally expandable member 46.

The first panel 1 has a counter surface 11 provided with two connectors 16 having the shape of a projection. Each connector 16 is thermally conductive. Each connector 16 is thermally connected to the first panel 1.

In the direction A2, the two connectors 465 of the thermally expandable member 46 are located between the two connectors 16 of the first panel 1. The two connectors 465 correspond to the two connectors 16 on a one-to-one basis. The connectors 465 and the connectors 16 corresponding to the respective connectors 465 are located to at least partially align with each other in a direction A1.

FIG. 12A shows a heat insulation state of the switching mechanism 4 of the thermal conductivity changing device 8. In the heat insulation state, each connector 465 (i.e., each movable end part 404) is located apart from a corresponding one of the connectors 16 in the direction A2 and is thermally insulated from the first panel 1. The distance between each connector 465 and its corresponding connector 16 is a distance that satisfactorily insulates heat.

FIG. 12B shows a heat dissipation state of the switching mechanism 4 of the thermal conductivity changing device 8. In the heat dissipation state, each connector 465 is in contact with a corresponding one of the connectors 16 and is thermally connected to the first panel 1.

In the eighth variation, of an outer surface of each connector 465, a portion which is to abut the corresponding one of the connectors 16 has a slope 408. Of an outer surface of each connector 16, a portion which the corresponding one of the connectors 465 is to abut has a slope 167. When each connector 465 abuts the corresponding one of the connectors 16, both the slopes 408 and 167 come into contact with each other in a position parallel to each other. Thus, wide areas of the connectors 465 and the connectors 16 contact with each other.

In the eighth variation, the thermally conductive member 401 expands and contracts in the direction A2, it is relatively easy to set the distance between the first panel 1 and the second panel 2 to a small distance.

### Ninth Variation

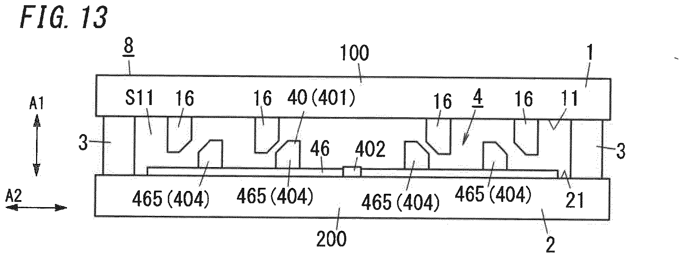

FIG. 13 shows a thermal conductivity changing device 8 included in the thermal conductivity changing unit of a ninth variation.

The thermal conductivity changing device 8 of the ninth variation has a basic configuration common with that of the eighth variation described above. The ninth variation is different from the eighth variation in the number and arrangement of connectors 465 and the number and arrangement of the connectors 16. In the following description, the description of components similar to those in the eighth variation is omitted.

In the ninth variation, four connectors 465 are fixed to one surface of a thermally expandable member 46. Specifically, two connectors 465 are located on each side of a fixing part 402 as the center in a direction A2. On both the sides in the direction A2, distances of the two connectors 465 to the fixing part 402 are different from each other.

A first panel 1 has a counter surface 11 to which four connectors 16 are fixed. These four connectors 16 correspond to the four connectors 465 of the thermally expandable member 46 on a one-to-one basis. Contact and non-contact between each connector 465 and each connector 16 in a correspondence relationship are switched by expansion and contraction of the thermally expandable member 46 in the direction A2.

The distance between each connector 465 and its corresponding connector 16 is determined to increase as the distance of the connector 465 from the fixing part 402 increases. That is, the distance between the connector 465 farther away from the fixing part 402 and its corresponding connector 16 is determined to be larger than the distance between the connector 465 close to the fixing part 402 and its corresponding connector 16.

This configuration enables the four connectors 465 to come into contact with the four connectors 16 on a one-to-one basis when the switching mechanism 4 is in the heat dissipation state.

Note that the numbers and shapes of connectors 465 and connectors 16 are not particularly limited. For example, the connector 465 may have a circular shape or an arc-like shape, and the connector 16 may have a circular shape or an arc-like shape. In this case, the connector 465 and the connector 16 are concentrically located when viewed in a direction A1, and thereby, expansion and contraction of the thermally expandable member 46 enable the connector 465 and the connector 16 to be switched between contact and non-contact.

### Tenth Variation

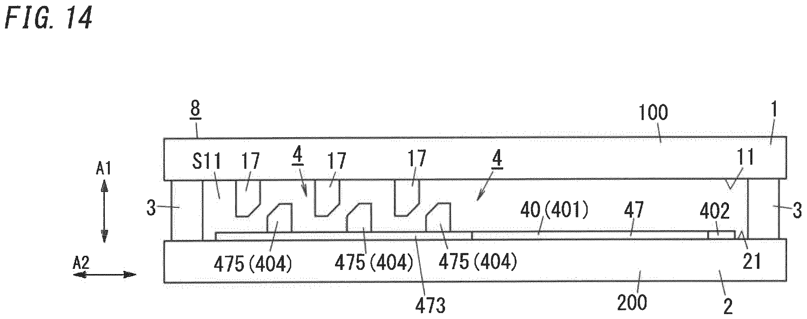

FIG. 14 shows a thermal conductivity changing device 8 included in the thermal conductivity changing unit of a tenth variation.

In the tenth variation, a thermal conduction part 40 (i.e., thermally conductive member 401) is partially made of a thermally expandable material such that the dimension of the thermal conduction part 40 changes in a direction A2 in accordance with a change of the temperature of the thermal conduction part 40.

Specifically, the thermally conductive member 401 includes: a thermally expandable member 47 having a bar-like shape; a thermally non-expandable member 473 having a bar-like shape and being bound to the thermally expandable member 47; and three connectors 475 bound to the thermally non-expandable member 473. The thermally conductive member 401 includes at least one connector 475.

The thermally expandable member 47 has a linear shape along the direction A2. One end of the thermally expandable member 47 in the direction A2 serves as a fixing part 402. The thermally non-expandable member 473 is bound to the other end of the thermally expandable member 47 in the direction A2 (that is, an end on an opposite side of the fixing part 402).

The thermally non-expandable member 473 has a linear shape along the direction A2. The thermally expandable member 47 and the thermally non-expandable member 473 are linearly continuous in the direction A2. The thermal expansion coefficient of the thermally non-expandable member 473 is very small, and thermal expansion resulting from a change of the temperature of the thermally non-expandable member 473 is substantially negligible.

The three connectors 475 are located at intervals in the direction A2. The three connectors 475 are parallel to each other.

A first panel 1 has a counter surface 11 provided with three connectors 17 having the shape of a projection. Each connector 17 is thermally conductive. Each connector 17 is thermally connected to the first panel 1.

The three connectors 475 included in the thermally conductive member 401 correspond to the three connectors 17 of the first panel 1 on a one-to-one basis. Contact and non-contact between each connector 475 and each connector 17 in a correspondence relationship are switched by expansion and contraction of the thermally expandable member 47 in the direction A2. The distance from the connectors 475 to their corresponding connectors 17 is the same for the three connectors 475.

FIG. 14 shows a heat insulation state of the switching mechanism 4 of the thermal conductivity changing device 8. In the heat insulation state, each connector 475 serving as a movable end part 404 of the thermally conductive member 401 is located apart from a corresponding one of the connectors 17 in the direction A2 and is thermally insulated from the first panel 1.

The three connectors 475 are in contact with the three connectors 17 on a one-to-one basis when the switching mechanism 4 is in the heat dissipation state.

In the tenth variation, the thermally conductive member 401 expands and contracts in a state where the thermally conductive member 401 is in contact with a counter surface 21 of a second panel 2, and therefore, it is preferable to apply a lubricant onto the counter surface 21. The lubricant applied here is preferably a vacuum lubricant made of a material such as WS₂, WMo₂, or the like.

The numbers and shapes of connectors 475 and connectors 17 are not particularly limited. At least one or more connector 475 and at least one or more connectors 17 are provided. The shapes of the connector 735 and the connector 17 are not particularly limited to linear shapes as long as the connector 735 and the connector 17 can be in contact with each other.

### Aspect

As can be seen from the above-described embodiment and variations, A thermal conductivity changing unit of a first aspect includes: at least one thermal conductivity changing device (8); and a gas barrier film (9) having an accommodation space (S1) which accommodates the at least one thermal conductivity changing device (8).

Each of the at least one thermal conductivity changing device (8) includes a pair of panels (1 and 2), a spacer (3), and a switching mechanism (4). The pair of panels (1 and 2) which are located to face each other. The spacer (3) lies between the pair of panels (1 and 2) to form a space (S11) between the pair of panels (1 and 2). The switching mechanism (4) is disposed in the space (S11) to switch heat transferability between the pair of panels (1 and 2). The gas barrier film (9) is configured to hermetically close an entirety of the accommodation space (S1) including the space (S11) in a depressurized state.

According to the thermal conductivity changing unit of the first aspect, the thermal conductivity changing device (8) is accommodated in the gas barrier film (9), and the gas barrier film (9) is hermetically sealed. Thus, it is possible to efficiently provide various types of thermal conductivity changing units.

In a thermal conductivity changing unit of a second aspect referring to the thermal conductivity changing unit of the first aspect, the accommodation space (S1) is depressurized such that a relationship that λ/D>0.3 is satisfied in the space (S11), where D is a distance between the pair of panels (1 and 2), and λ is a mean free path of air in the space (S11).

According to the thermal conductivity changing unit of the second aspect, the space (S11) is a molecular flow region. This provides the property that the thermal conductance of the space (S11) does not depend on the distance (D).

As described above, as the thickness of each thermal conductivity changing device (8) decreases, disadvantages for enhancing the thermal insulation property of the space (S11) generally increases. However, in a case where the relationship λ/D > 0.3 is satisfied in the space (S11), it can be achieved both that the space (S11) is highly thermally insulative and that the thickness of each thermal conductivity changing device (8) is reduced. Having a small thickness, each thermal conductivity changing device (8) can exhibit a high thermal conductivity when the pair of panels (1 and 2) are thermally connected to each other via the switching mechanism (4).

That is, in a case where the relationship λ/D > 0.3 is satisfied in the space (S11), when the pair of panels (1 and 2) are thermally connected to each other via the switching mechanism (4), the thermal conductivity changing device (8) can exhibit a high thermal conductivity due to its thinness, and when the pair of panels (1 and 2) are thermally insulated from each other, the thermal conductivity changing device (8) can exhibit a high thermal insulation property due to the thermal insulation property of the space (S11).

In a thermal conductivity changing unit of a third aspect referring to the thermal conductivity changing unit of the first or second aspect, the at least one thermal conductivity changing device (8) includes a plurality of thermal conductivity changing devices (8). The plurality of thermal conductivity changing devices (8) are aligned in a direction (A2) and are accommodated in the accommodation space (S1). The plurality of thermal conductivity changing devices (8) are aligned such that the direction (A2) is orthogonal to a direction (A1) in which the pair of panels (1 and 2) of each of the plurality of thermal conductivity changing devices (8) face each other.

According to the thermal conductivity changing unit of the third aspect, accordingly selecting the number and arrangement of the thermal conductivity changing devices (8) enables various types of thermal conductivity changing units to be provided.

In a thermal conductivity changing unit of a fourth aspect referring to the thermal conductivity changing unit of the third aspect, an entirety of the gas barrier film (9) is freely bendable in a state where the plurality of thermal conductivity changing devices (8) are accommodated in the accommodation space (S1) and the accommodation space (S1) is maintained in a depressurized state.

According to the thermal conductivity changing unit of the fourth aspect, the entirety of the unit is structured to be bendable. Therefore, installation of the thermal conductivity changing unit to objects having various shapes becomes easy.

In a thermal conductivity changing unit of a fifth aspect referring to the thermal conductivity changing unit of any one of the first to fourth aspects, the switching mechanism (4) includes a thermal conduction part (40) configured to come into contact with the pair of panels (1 and 2). The switching mechanism (4) is configured such that a geometric dimension of the thermal conduction part (40) changes to switch between a heat dissipation state and a heat insulation state. The heat dissipation state is a state where the thermal conduction part (40) is in contact with both the pair of panels (1 and 2). The heat insulation state is a state where the thermal conduction part (40) is apart from one of the pair of panels (1 and 2).

According to the thermal conductivity changing unit of the fifth aspect, changing the geometric dimension of the thermal conduction part (40) enables the thermal conductivity to be significantly changed without changing the outer shape of the entirety of the thermal conductivity switching unit.

In a thermal conductivity changing unit of a sixth aspect referring to the thermal conductivity changing unit of the fifth aspect, the thermal conduction part (40) is configured to deform in accordance with a change of a temperature of the thermal conduction part (40).

According to the thermal conductivity changing unit of the sixth aspect, it is possible to automatically switch the thermal conductivity of the entirety of the thermal conductivity switching unit in accordance with the temperature of a surrounding environment.

In a thermal conductivity changing unit of a seventh aspect referring to the thermal conductivity changing unit of the fifth aspect, the thermal conduction part (40) is configured to partially or entirely expand and contract in accordance with a change of a temperature of the thermal conduction part (40).

According to the thermal conductivity changing unit of the seventh aspect, it is possible to automatically switch the thermal conductivity of the entirety of the thermal conductivity switching unit in accordance with the temperature of a surrounding environment.

In a thermal conductivity changing unit of an eighth aspect referring to the thermal conductivity changing unit of the fifth aspect, the thermal conduction part (40) is configured to deform due to electrical energy externally given.

According to the thermal conductivity changing unit of the eighth aspect, electrical control enables the thermal conductivity of the entirety of the thermal conductivity switching unit to be freely switched.

A manufacturing method of the thermal conductivity changing unit of the first aspect includes a disposition step and a sealing step. The disposition step is a step of disposing at least one thermal conductivity changing device (8) in an accommodation space (S1) on an inner side of a gas barrier film (9). The sealing step is a step of sealing the gas barrier film (9) such that the accommodation space (S1) is maintained in a depressurized state. Each of the at least one thermal conductivity changing device (8) includes: a pair of panels (1 and 2) which are located to face each other; a spacer (3) lying between the pair of panels (1 and 2) to form a space (S11) which is open between the pair of panels (1 and 2); and a switching mechanism (4) disposed in the space (S11) to switch heat transferability between the pair of panels (1 and 2).

According to the manufacturing method of the thermal conductivity changing unit of the first aspect, it is possible to efficiently manufacture various types of thermal conductivity changing units.

The thermal conductivity changing unit has been described based on the embodiment and the variations, but the thermal conductivity changing unit is not limited to the embodiment and the variations. The embodiment and the variations can be readily modified, replaced or combined in various manners depending on design choice or any other factor.

### Reference Signs List

- 1: PANEL (FIRST PANEL)
- 2: PANEL (SECOND PANEL)
- 3: SPACER
- 4: SWITCHING MECHANISM
- 40: THERMAL CONDUCTION PART
- 8: THERMAL CONDUCTIVITY CHANGING DEVICE
- 9: GAS BARRIER FILM
- A1: DIRECTION
- A2: DIRECTION
- S1: ACCOMMODATION SPACE
- S11: SPACE

## Claims

1. A thermal conductivity changing unit, comprising:
at least one thermal conductivity changing device; and
a gas barrier film having an accommodation space in which the at least one thermal conductivity changing device is accommodated,
each of the at least one thermal conductivity changing device including:
a pair of panels which are located to face each other;
a spacer lying between the pair of panels to form a space between the pair of panels; and
a switching mechanism disposed in the space to switch heat transferability between the pair of panels,
the gas barrier film being sealed such that an entirety of the accommodation space including the space is maintained in a depressurized state.

2. The thermal conductivity changing unit of claim 1, wherein
the accommodation space is depressurized such that a relationship λ/D>0.3 is satisfied in the space, where D is a distance between the pair of panels, and λ is a mean free path of air in the space.

3. The thermal conductivity changing unit of claim 1 or 2, wherein
the at least one thermal conductivity changing device includes a plurality of thermal conductivity changing devices, and
the plurality of thermal conductivity changing devices are aligned such that a direction in which the pair of panels of each of the plurality of thermal conductivity changing devices face each other is orthogonal to a direction in which the plurality of thermal conductivity changing devices are aligned.

4. The thermal conductivity changing unit of claim 3, wherein
an entirety of the gas barrier film is freely bendable in a state where the plurality of thermal conductivity changing devices are accommodated in the accommodation space and the accommodation space is maintained in a depressurized state.

5. The thermal conductivity changing unit of any one of claims 1 to 4, wherein
the switching mechanism includes a thermal conduction part configured to come into contact with the pair of panels and is configured such that a geometric dimension of the thermal conduction part changes to switch between a heat dissipation state and a heat insulation state, in the heat dissipation state, the thermal conduction part is in contact with both the pair of panels, and in the heat insulation state, the thermal conduction part is apart from one of the pair of panels.

6. The thermal conductivity changing unit of claim 5, wherein
the thermal conduction part is configured to deform in accordance with a change of a temperature of the thermal conduction part.

7. The thermal conductivity changing unit of claim 5, wherein
the thermal conduction part is configured to partially or entirely expand and contract in accordance with a change of a temperature of the thermal conduction part.

8. The thermal conductivity changing unit of claim 5, wherein
the thermal conduction part is configured to deform due to electrical energy externally given.

9. A method for manufacturing a thermal conductivity changing unit, the method comprising:
a disposition step of disposing at least one thermal conductivity changing device in an accommodation space on an inner side of a gas barrier film; and
a sealing step of sealing the gas barrier film such that the accommodation space is maintained in a depressurized state,
each of the at least one thermal conductivity changing device including:
a pair of panels which are located to face each other;
a spacer lying between the pair of panels to form a space which is open between the pair of panels; and
a switching mechanism disposed in the space to switch heat transferability between the pair of panels.
